# EUROPEAN PATENT SPECIFICATION

(11) **EP 3 114 417 B1**
(45) Date of publication and mention of the grant of the patent: **14.07.2021**
(21) Application number: 15715410.5
(22) Date of filing: 25.02.2015
(51) Int. Cl.: F25B 39/04

(54) **HORIZONTAL CONDENSER WITH COOLANT ACCUMULATOR**
HORIZONTALER VERDICHTER MIT KÜHLAKKUMULATOR
CONDENSEUR HORIZONTAL AVEC ACCUMULATEUR DE RÉFRIGÉRANT

(30) Priority: 26.02.2014 IT TO20140157
(43) Date of publication of application: 11.01.2017
(73) Proprietor: Denso Thermal Systems Spa, 10046 Poirino, (TO) (IT)
(72) Inventor: NAPOLI, Pasquale, I-10046 Poirino (Torino) (IT); PEROCCHIO, Davide, I-10046 Poirino (Torino) (IT); TOSCANO RIVALTA, Giovanni, I-10046 Poirino (Torino) (IT); DI TONNO, Massimo, I-10046 Poirino (Torino) (IT)
(74) Representative: Vanzini, Christian
(86) International application number: PCT/IB2015/051391
(87) International publication number: WO 2015/128807

(56) References cited:
- EP-A2- 1 464 901
- WO-A1-2005/108896
- JP-A- H11 257 799
- None

## Description

The present invention relates to a vehicle condenser including an accumulator and a header tank to which the accumulator is connected in parallelism relationship therewith, wherein said accumulator comprises a tubular container having a side wall extending along a longitudinal axis and opposite ends, said container further having a fluid inlet and a fluid outlet disposed on the side wall thereof and connected to a condensing section and a sub-cooling section of the condenser, respectively.

In vehicle air-conditioning systems, the condensing section of the condenser is used to cool the high-temperature and high-pressure gaseous cooling fluid emitted by the compressor, and to cause the condensation in a liquid cooling fluid. The sub-cooling section is used to further cool the liquid cooling fluid, so as to further reduce the enthalpy (or to increase the gap in enthalpy between the inlet and the outlet). The container of the accumulator is used to separate gaseous and liquid coolant originating from the condensing section and to ensure that only liquid coolant reaches the sub-cooling section. The removal of humidity and foreign material from the coolant is moreover provided for by the use of a filter for particles and a desiccant material inside the accumulator.

In a number of types of vehicle, for example buses, off-road vehicles and rail vehicles, it may be provided that the air-conditioning system is disposed on the roof of the vehicle. In these applications, the condenser is generally positioned in a horizontal arrangement, that is with the air passage faces disposed perpendicular to the vertical direction. In these cases, the accumulator forms a body which is materially separated from the condenser; the transportation of the coolant between the condenser and the accumulator is provided for by connection pipes.

In the automotive field, solutions in which the accumulator is integrated in the condenser are known. A condenser with integrated accumulator is disclosed for example in WO 2005/108896 A1. This solution of integration is generally considered to be advantageous in terms of performance, since it is possible to force and control the sub-cooling to values which optimize the COP, and also ease of installation and a reduction in costs. The integrated solutions developed for the automotive sector are intended for a vertical arrangement of the condenser; it has been found in these solutions that, if the condenser is disposed horizontally, the accumulator integrated therein is not able to operate.

There is therefore the need to develop a solution in which the accumulator can be integrated in condensers intended to be positioned horizontally.

US6341647B1 and KR20030092542A disclose condensers according to the preamble of claim 1.

In the light of the above mentioned need, the present invention proposes a condenser having the features of claim 1.

The inventors carried out charging tests on condensers with integrated accumulators and disposed horizontally, and discovered that the arrangement of the fluid inlet and of the fluid outlet according to the invention is essential for the accumulator to be filled correctly.

According to the invention, one or more connection parts are disposed at the side wall of the container, said connection parts protruding laterally from the side wall and being provided for connecting the accumulator to a header tank of the condenser and creating an air gap between the side wall of the container and the header tank, said fluid inlet and fluid outlet being formed through said connection parts. The aforementioned connection parts make it possible to achieve thermal decoupling between the accumulator and the header tank; it has indeed been found that the accumulator has to be adiabatic so that a horizontal charging plateau is present in the charging curve of the accumulator.

Preferred embodiments of the invention are defined in the dependent claims, which are to be considered an integral part of the present description.

Further features and advantages of the condenser according to the invention will be made clearer by the following detailed description of an embodiment of the invention, given with reference to the appended drawings, which are provided purely as non-limiting illustrations and in which:
Figure 1 is a perspective view of an accumulator, coupled to a header tank of a condenser according to the invention;
Figures la and 1b are cross-sectional views of the accumulator shown in Figure 1, viewed in two different transverse planes Ia and Ib;
Figure 2 is a plan view of an accumulator, coupled to a header tank of a condenser according to the invention;
Figures 2a and 2b are cross-sectional views of the accumulator shown in Figure 1, viewed in two different transverse planes IIa and IIb;
Figure 3 is a cross-sectional view of an accumulator of the condenser according to the invention;
Figure 4 is a perspective view of another embodiment of the accumulator, coupled to a header tank of a condenser according to the invention;
Figures 4a to 4c are cross-sectional views of the accumulator shown in Figure 4, viewed in three different transverse planes;
Figures 5 and 6 show different connection parts for an accumulator of the condenser according to the invention;
Figure 7 is a longitudinal sectional view of a further embodiment of the accumulator, coupled to a header tank of a condenser according to the invention;
Figures 8 to 9 are sectional views of a further embodiment of the accumulator of the condenser according to the invention;
Figure 9a is a perspective view of a further embodiment of the accumulator of the condenser according to the invention; and
Figures 10 and 11 are views, cut away and in longitudinal section respectively, of two different variants of an accumulator of the condenser according to the invention.

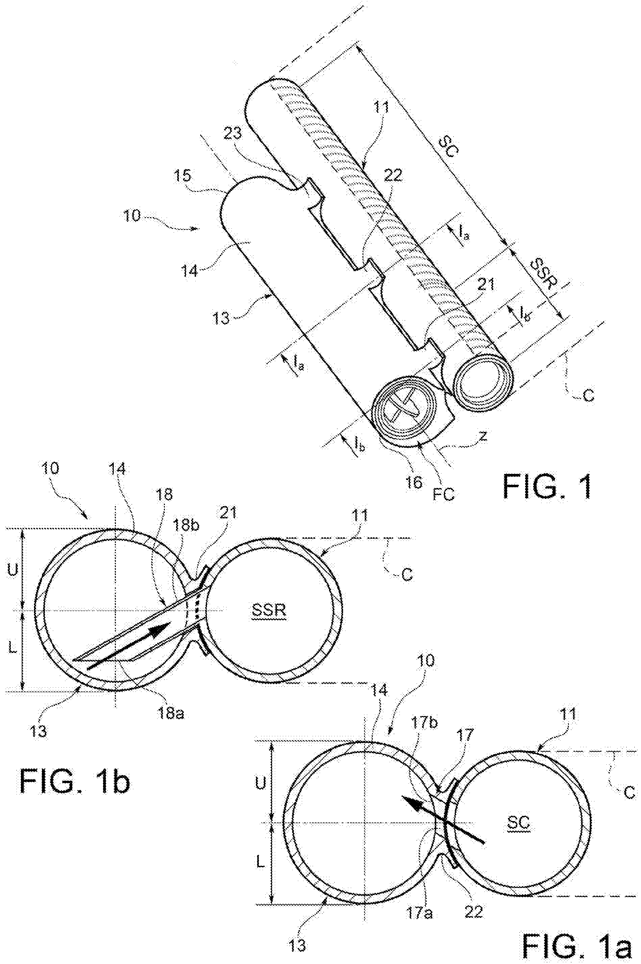

With reference to Figures 1 to 3, what is shown is an accumulator 10, coupled to a header tank 11 of a condenser C according to the invention.

The accumulator 10 comprises a tubular container 13 having a side wall 14 extending along a longitudinal axis z of the accumulator and having opposite ends 15, 16. Each of these ends 15, 16 can be closed with a cover brazed or soldered to the ends or with caps screwed on or fixed in another way, as will be explained hereinbelow, or else by an end wall formed in one piece with the side wall.

The container 13 further has a fluid inlet 17 and a fluid outlet 18 disposed on the side wall 14 of the container, these being shown in Figures 1a and 1b, which show cross-sections viewed in vertical planes denoted by the lines Ia and Ib in Figure 1. The fluid inlet 17 (Figure 1a) can be connected to a condensing section of the condenser C through a part SC of the header tank 11. The fluid outlet 18 (Figure 1b) can be connected to a sub-cooling section of the condenser C through another part SSR of the header tank 11.

In use, i.e. when the condenser C is installed on a vehicle, the accumulator 15 can be disposed in a horizontal arrangement together which the condenser in which it is integrated. In the position of use, the container 13 of the accumulator therefore has a lower part L and an upper part U with respect to a transverse direction perpendicular to the longitudinal axis z of the container, which in the position of use corresponds to a vertical direction.

At the side wall 14 of the container 13 of the accumulator, the fluid inlet 17 (Figure 1a) comprises an inlet duct 17a passing through the side wall 14, and an inlet port 17b on the inner surface of the side wall 14, at which the inlet duct 17a opens out inside the accumulator.

In the example shown in Figure 1b, the fluid outlet 18 comprises an outlet port 18a disposed close to the side wall 14 of the container 13 of the accumulator, at the lower part of the container. In particular, the fluid outlet 18 comprises a tube 18b attached to the side wall 14 of the container 13, said tube dipping into the lower part of the container. The outlet port 18a is therefore disposed at the lower end of the tube 18b.

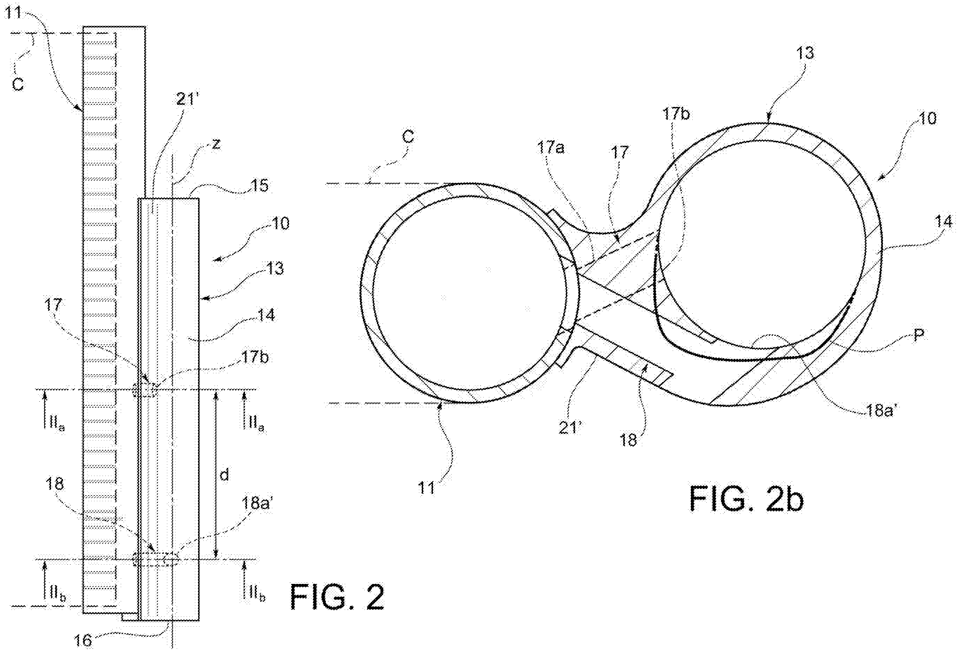

According to alternative embodiments (shown for example in Figures 2b, 3 and 4a), the fluid outlet 18 comprises an outlet port 18a' disposed at the side wall 14, at the lower part of the container, in particular formed on said side wall.

The accumulator 10 is connected to the header tank 11. The accumulator and the header tank are connected to one another in such a way as to form a single body. According to the invention they are further connected to one another in such a way as to be thermally decoupled, in the manner which will be described hereinbelow.

The fluid inlet 17 and the fluid outlet 18 have a distance d from one another, along the longitudinal axis z of the container 13, preferably equal to or greater than 15 mm.

The container 13 of the accumulator has an inner bore which may be of circular cross-section and whose diameter is comprised in particular between 18 mm and 70 mm. According to alternative embodiments, the inner bore of the container may be of non-circular cross-section, for example may be of elliptical or square cross-section, or else a more complex shape, as shown by the bold line P in Figure 2b. The circular shape may be preferable from a production aspect, in that it is easier to produce; on the other hand, more complex shapes can be better in terms of the filling efficiency.

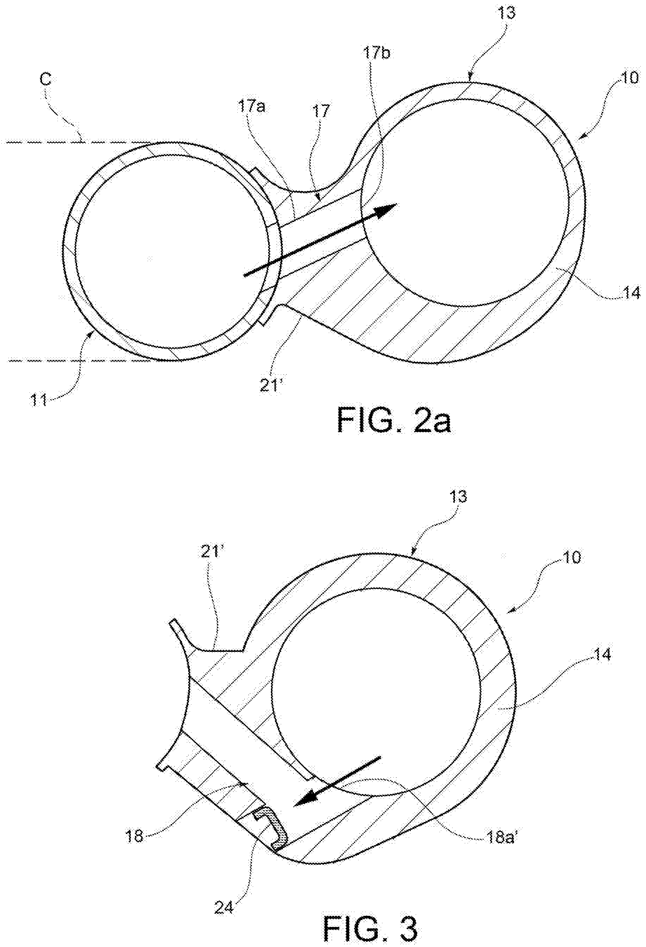

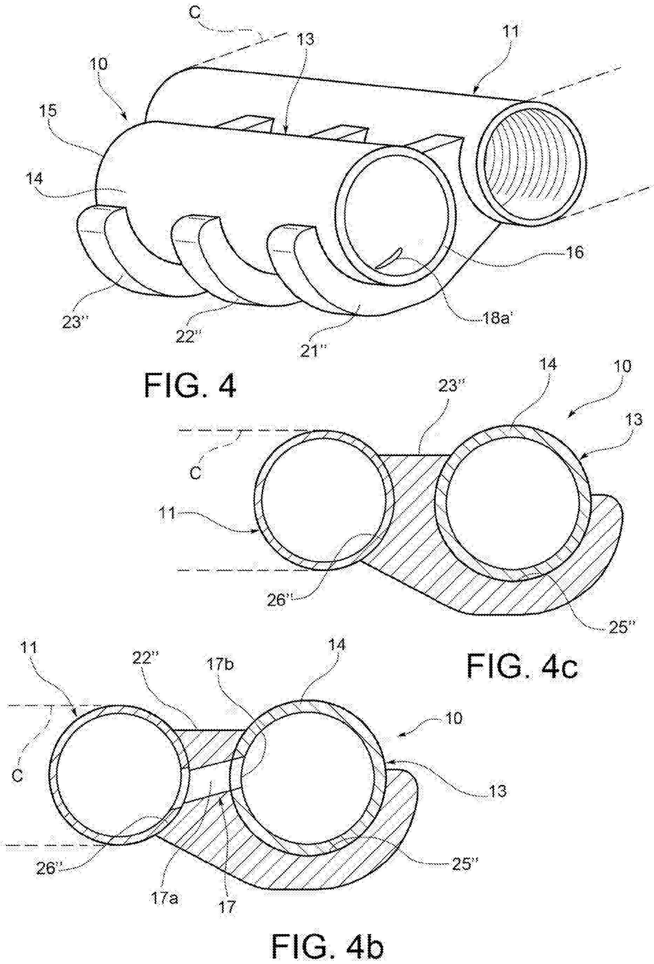

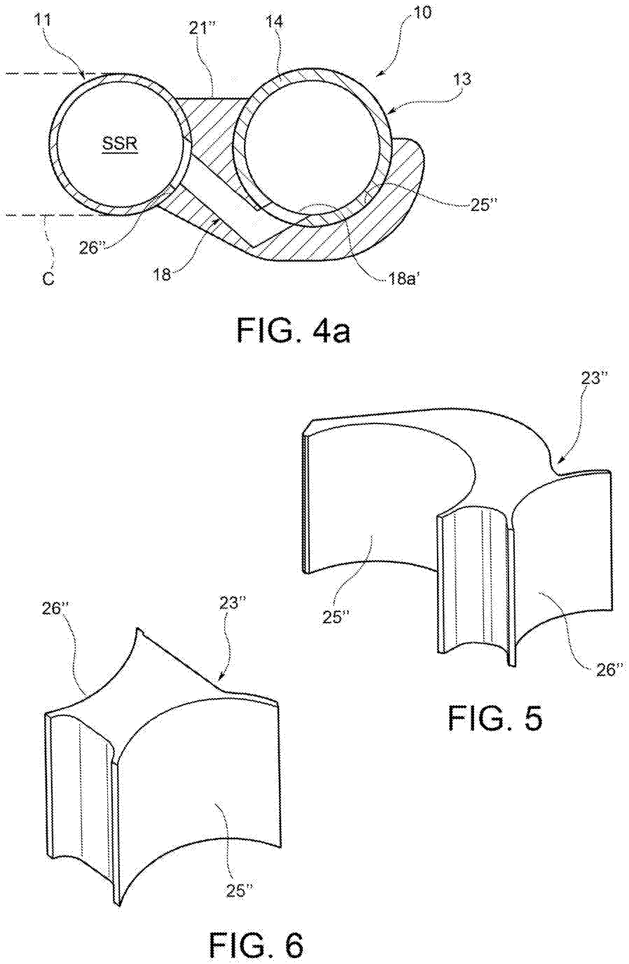

As shown in Figure 1 (or in Figure 4), one or more connection parts 21, 22, 23 are disposed on the side wall 14 of the container 13, said connection parts protruding laterally from the side wall, wherein said connection parts are provided for connecting the accumulator 10 to the header tank 11 and creating an air gap between the side wall 14 of the container 13 of the accumulator and the header tank 11. In order that a sufficient air gap is created, the overall width of the connection parts 21, 22, 23 has to be as small as possible, appropriately with the structural resistance, with respect to the longitudinal extension of the accumulator. Thermal decoupling between the accumulator and the header tank is achieved in this way. As explained above, a state of thermal decoupling between the accumulator and the header tank is advantageous, since it ensures that an optimum horizontal charging plateau is present in the charging curve of the accumulator. However, the invention also includes embodiments in which the accumulator is connected to the header tank along a prevalent part of its length (by way of example, in the embodiment shown in Figure 2, the accumulator 10 is connected to the header tank 11 through a connection part 21' which extends along the entire length of the accumulator 10), although these embodiments are not preferable in respect of that described above.

It is preferable that the fluid inlet 17 and the fluid outlet 18 are formed through the connection parts 21, 22, 23. By way of example, in the embodiment shown in Figures 1, 1a and 1b, the fluid inlet 17 is formed through the intermediate connection part 22, whereas a part of the fluid outlet 18 is formed through the connection part 21 shown further down in Figure 1, and is connected to the tube 18b.

According to one embodiment of the invention, the side wall 14 of the container 13 of the accumulator and the connection parts 21, 22, 23 (Figure 1) or the connection part 21' (Figure 2) form a single piece obtained through extrusion and machining. The fluid inlet 17 and the fluid outlet 18 are formed through the connection parts 21-22 and 21' by means of punching and boring operations. Figures 2b and 3 show an example with a fluid outlet 18 having an elbow shape; the section of the fluid outlet which descends from the accumulator 10 has an undesirable opening on the outside, caused by the machining. This opening is therefore closed by a cover 24 brazed to the accumulator.

According to another embodiment of the invention, shown in Figures 4, 4a-4c, 5 and 6, the connection parts are separately produced elements, and are therefore brazed to the side wall 14 of the container 13 of the accumulator. The connection parts produced separately from the accumulator are denoted by the reference signs 21", 22', 23" in Figures 4, 4a-4c, 5 and 6. The cross-sections shown in Figures 4a-4c are viewed respectively at the connection parts 21", 22" and 23". Figure 5 shows a connection part viewed separately, relating to the embodiment of the accumulator shown in Figure 4. 25" denotes an arcuate connection surface which can be coupled to a corresponding surface portion of the side wall 14 of the container 13 of the accumulator. 26" instead denotes an arcuate connection surface which can be coupled to a corresponding surface portion of the side wall of the header tank 11. Figure 6 shows a connection part viewed separately, this being shaped so as to produce a configuration of accumulator-header tank connection analogous to that shown in Figure 1, but with the connection parts being produced separately from the accumulator. The numerical reference signs used in Figure 6 correspond to those in Figure 5. In the embodiment shown in Figure 5, the connection surface 25" intended for coupling to the accumulator extends over a greater arc with respect to that shown in Figure 6, so as to completely encompass the lower part of the accumulator 10. In the case of the separate connection parts, too, the fluid inlet 17 and the fluid outlet 18 are naturally formed through the connection parts 21" and 22" by means of punching and boring operations.

To attach the connection parts 21", 22" and 23" to the accumulator 10 by means of brazing, the connection surfaces 25" or the outer surface of the side wall 14 of the accumulator are provided with a plating.

Analogously, to attach the connection parts 21", 22" and 23" to the header tank 11 by means of brazing, the connection surfaces 26" or the outer surface of the side wall of the header tank are provided with a plating. In the case in which the connection parts are formed in a single piece with the accumulator, too, these connection parts naturally have connection surfaces which can be coupled to the header tank; these surfaces of the connection parts or the outer surface of the side wall of the header tank are provided with a plating in order to achieve the attachment between the connection parts and the header tank.

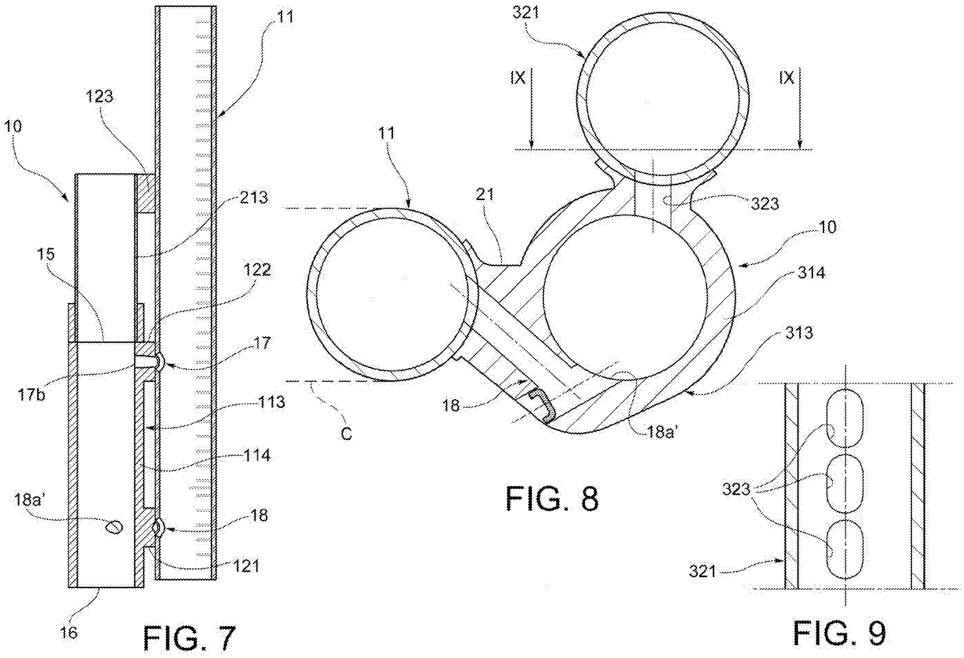

According to a further embodiment of the invention, shown in Figure 7, the container of the accumulator comprises a main container part 113, having a side wall 114 on which the fluid inlet 17 and the fluid outlet 18 are disposed, and an extension container part 213 disposed aligned with the main container part 113 and attached, for example screwed or soldered, to an end 15 thereof. In the example shown, the main container part 113 is connected to the header tank 11 by means of connection parts 121, 122 which form a single piece with the side wall 114 of the main container part 113 and through which the fluid inlet and the fluid outlet are formed, and the extension container part 213 is connected to the header tank 11 by means of a connection part 123 brazed to the side wall of the extension container part 213. It goes without saying that other configurations for the connection between the accumulator with an extension and the header tank are possible according to the invention.

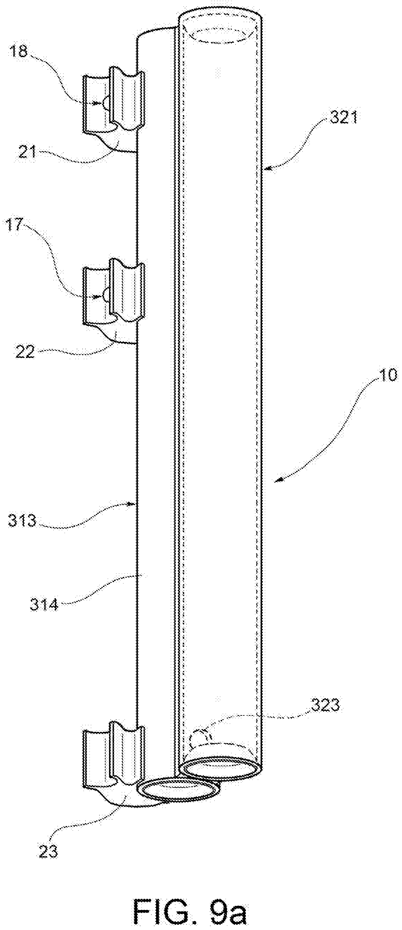

According to yet another embodiment, shown in Figures 8 and 9, the accumulator comprises a tubular container 313, to the side wall 314 of which is further connected an auxiliary tubular reservoir 321 disposed parallel to the container 313 of the accumulator. The side wall 314 of the container 313 of the accumulator has at least one through opening 322, that places the inside of the container 313 in fluid communication with the inside of the auxiliary reservoir 321. As can be seen in the section shown in Figure 9, in the example shown there are a plurality of openings 322 disposed along the longitudinal direction in the form of eyelets. According to the embodiment shown in Figure 8, the auxiliary reservoir 321 can be brazed to the container 313 of the accumulator. In this case, the container 313 of the accumulator has a connection part with a connection surface which can be coupled, by means of brazing, to a surface portion of the side wall of the auxiliary reservoir 321. According to a further embodiment, shown in Figure 9a, the auxiliary reservoir 321 can be formed in a single piece with the container 313 of the accumulator, in particular by means of extrusion.

The embodiments shown in Figures 7 and 8 and described above have provisions for increasing the volume of the accumulator, if the applicable circumstances require it.

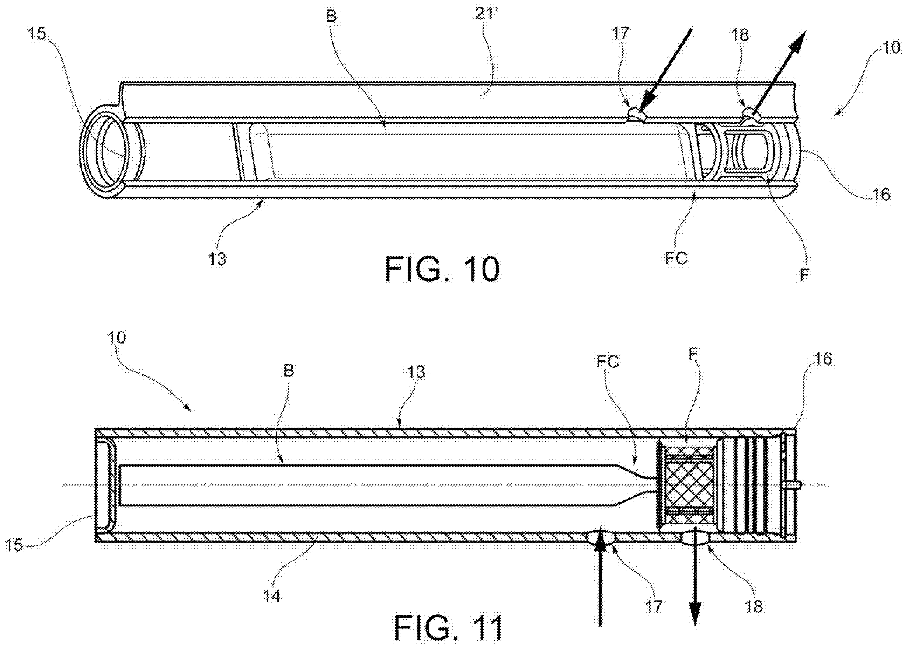

With reference to Figures 10 and 11, the accumulator 10 further comprises, in a conventional manner, a filter cartridge FC housed inside the tubular container and comprising a filter F and a pocket B of permeable material, containing a desiccant material. The filter cartridge is disposed in such a way that the filter F is placed between the fluid inlet 17 and the fluid outlet 18.

According to the variant shown in Figure 10, the accumulator is of the non-replaceable cartridge type, and therefore the ends 15 and 16 of the accumulator are closed permanently; for this purpose, they have respective covers soldered to the side wall of the container, or a soldered cover and an end wall formed integrally with the side wall.

According to the variant shown in Figure 11, the accumulator is of the replaceable cartridge type, and therefore one of the ends 15 and 16 of the accumulator is closed by a detachable cover or cap, which may possibly be an integral part of the filter cartridge. The other end can have a soldered cover or an end wall formed integrally with the side wall.

It is self-evident that all the embodiments of an accumulator described above can be realized as replaceable-filter accumulators or as non-replaceable-filter accumulators. More generally, elements described in relation to individual embodiments can be combined, where appropriate, with elements described in relation to other embodiments.

## Claims

1. A vehicle condenser including an accumulator (10) and a header tank (11) to which the accumulator (10) is connected in parallelism relationship therewith, wherein said accumulator comprises a tubular container (13; 113, 213; 313) having a side wall (14; 114; 314) extending along a longitudinal axis (z) and having opposite ends (15, 16), said container further having a fluid inlet (17) and a fluid outlet (18) disposed on the side wall (14; 114; 314) thereof and connected to a condensing section (SC) and a sub-cooling section (SSR) of the condenser, respectively,
wherein the condenser in use is disposed in a horizontal arrangement in which the container (13; 113, 213; 313) of the accumulator has a lower part and an upper part with respect to a transverse direction perpendicular to the longitudinal axis (z) of the container (13; 113, 213; 313), wherein the fluid inlet (17) comprises an inlet port (17b) formed at the side wall (14; 114; 314) of the container (13; 113, 213; 313), and the fluid outlet (18) comprises an outlet port (18a; 18a') disposed at or close to the side wall (14; 114; 314), at the lower part of the container (13; 113, 213; 313),
the condenser being **characterized in that** one or more connection parts (21, 22, 23; 21'; 21", 22", 23"; 121, 122, 123) are disposed at the side wall (14; 114; 314) of the container (13; 113, 213; 313), said connection parts protruding laterally from the side wall, wherein said connection parts are provided for connecting the accumulator (10) to the header tank (11) of the condenser and creating an air gap between the side wall (14; 114; 314) of the container (13; 113, 213; 313) and the header tank (11), said fluid inlet and fluid outlet being formed through said connection parts.

2. A condenser according to claim 1, wherein said fluid inlet and fluid outlet have a distance (d) from one another, along the longitudinal axis (z) of the container (13; 113, 213; 313), equal to or greater than 15 mm.

3. A condenser according to claim 1 or 2, wherein the outlet port (18a') is formed on the side wall (14; 114; 314) of the container (13; 113, 213; 313), at the lower part of the container (13; 113, 213; 313).

4. A condenser according to claim 1 or 2, wherein the fluid outlet (18) comprises a tube (18b) attached to the side wall (14) of the container (13), the outlet port (18a) being disposed at the lower end of the tube (18b), and being disposed close to the side wall (14) of the container (13), at the lower part of the container (13).

5. A condenser according to any of the preceding claims, wherein said container has an inner bore of circular cross-section, whose diameter is comprised between 18 mm and 70 mm.

6. A condenser according to any of claims 1 to 4, wherein said container has an inner bore of non-circular cross-section.

7. A condenser according to any of the preceding claims, wherein said container comprises a main container part (113), the fluid inlet (17) and the fluid outlet (18) being disposed on the side wall (114) thereof, and an extension container part (213) disposed aligned to the main container part (113) and attached to an end (15) thereof.

8. A condenser according to any of the preceding claims, further comprising an auxiliary tubular reservoir (321) disposed parallel to the container (313) of the accumulator and connected thereto through the side wall (314) of the container (313), said side wall having at least one opening (323) that places the inside of the container (313) of the accumulator in fluid communication with the inside of the auxiliary reservoir (321).

9. A condenser according to any of the preceding claims, wherein said side wall of the container and said connection parts form a single piece obtained through extrusion and machining.

10. A condenser according to any of the preceding claims, wherein said connection parts are brazed to the side wall (14; 114; 314) of the container (13; 113, 213; 313).

11. A condenser according to any of the preceding claims, wherein said fluid inlet and fluid outlet are for placing the inside of the container (13; 113, 213; 313) of the accumulator in fluid communication with the inside of the header tank (11).

12. A condenser according to claim 11, wherein said connection parts are brazed to the side wall of the header tank (11).

## Patentansprüche

1. Fahrzeugkondensator mit einem Akkumulator (10) und einem Ausgleichsbehälter (11), mit dem der Akkumulator in Parallelität zu diesem verbunden ist, wobei der Akkumulator einen rohrförmigen Behälter (13; 113, 213; 313) mit einer sich entlang einer Längsachse (z) erstreckenden Seitenwand (14; 114; 314) und mit entgegengesetzten Enden (15, 16) aufweist, wobei der Behälter weiter einen Fluideinlass (17) und einen Fluidauslass (18) aufweist, die an dessen Seitenwand (14; 114; 314) angeordnet sind und mit einem Kondensationsabschnitt (SC) bzw. einem Unterkühlungsabschnitt (SSR) des Kondensators verbunden sind,
wobei der Kondensator im Gebrauch in einer horizontalen Anordnung untergebracht ist, in welcher der Behälter (13; 113, 213; 313) des Akkumulators bezüglich einer Querrichtung senkrecht zur Längsachse (z) des Behälters (13; 113, 213; 313) einen unteren und einen oberen Teil aufweist, wobei der Fluideinlass (17) eine an der Seitenwand (14; 114; 314) des Behälters (13; 113, 213; 313) gebildete Einlassöffnung (17b) aufweist und der Fluidauslass (18) eine an oder in der Nähe der Seitenwand (14; 114; 114) angeordnete Auslassöffnung (18a; 18a') im unteren Teil des Behälters (13; 113, 213; 313) aufweist,
wobei der Kondensator **dadurch gekennzeichnet ist, dass** an der Seitenwand (14; 114; 314) des Behälters (13; 113, 213; 313) ein oder mehrere Verbindungsteil(e) (21, 22, 23; 21'; 21", 22", 23"; 121, 122, 123) angeordnet ist/sind, wobei die Verbindungsteile seitlich aus der Seitenwand herausragen, wobei die Verbindungsteile zum Verbinden des Ackumulators (10) mit dem Ausgleichsbehälter (11) des Kondensators und zur Ausbildung eines Lüftungsschlitzes zwischen der Seitenwand (14; 114; 314) des Behälters (13; 113, 213; 313) und dem Ausgleichsbehälter (11) vorgesehen sind, wobei der Fluideinlass und der Fluidauslass durch die Verbindungsteile hindurch ausgebildet sind.

2. Kondensator nach Anspruch 1, wobei der Fluideinlass und der Fluidauslass entlang der Längsachse (z) des Behälters (13; 113, 213; 313) einen Abstand (d) voneinander haben, der gleich oder größer als 15 mm ist.

3. Kondensator nach Anspruch 1 oder 2, wobei die Auslassöffnung (18a') an der Seitenwand (14; 114, 314) des Behälters (13; 113, 213; 313), am unteren Teil des Behälters (13; 113, 213; 313), ausgebildet ist.

4. Kondensator nach Anspruch 1 oder 2, wobei der Fluidauslass (18) eine an der Seitenwand (14) des Behälters (13) befestigte Röhre (18b) aufweist, wobei die Auslassöffnung (18a) an dem unteren Ende der Röhre (18b) und in der Nähe der Seitenwand (14) des Behälters (13), am unteren Teil des Behälters (13), angeordnet ist.

5. Kondensator nach einem der vorangehenden Ansprüche, wobei der Behälter eine Innenbohrung mit kreisförmigem Querschnitt aufweist, deren Durchmesser zwischen 18 mm und 70 mm beträgt.

6. Kondensator nach einem der Ansprüche 1 bis 4, wobei der Behälter eine Innenbohrung mit nicht kreisförmigem Querschnitt aufweist.

7. Kondensator nach einem der vorangehenden Ansprüche, wobei der Behälter ein Behälter-Hauptteil (113), wobei der Fluideinlass (17) und der Fluidauslass (18) an dessen Seitenwand (114) angeordnet sind, und ein Behälter-Erweiterungsteil (213) aufweist, das fluchtend mit dem Behälter-Hauptteil (113) angeordnet und an einem Ende (15) desselben befestigt ist.

8. Kondensator nach einem der vorangehenden Ansprüche, weiter aufweisend einen rohrförmigen Zusatzbehälter (321), der parallel zu dem Behälter (313) des Akkumulators angeordnet und durch die Seitenwand (314) des Behälters (313) damit verbunden ist, wobei die Seitenwand mindestens eine Öffnung (323) aufweist, die das Innere des Behälters (313) des Akkumulators in Fluidverbindung mit dem Inneren des Zusatzbehälters (321) bringt.

9. Kondensator nach einem der vorangehenden Ansprüche, wobei die Seitenwand des Behälters und die Verbindungsteile ein einziges, durch Extrusion und Bearbeitung erhaltenes Bauteil bilden.

10. Kondensator nach einem der vorangehenden Ansprüche, wobei die Verbindungsteile an die Seitenwand (14; 114; 314) des Behälters (13; 113, 213; 313) angelötet sind.

11. Kondensator nach einem der vorangehenden Ansprüche, wobei der Fluideinlass und der Fluidauslass dazu dienen, das Innere des Behälters (13; 113, 213; 313) des Ackumulators in Fluidverbindung mit dem Inneren des Ausgleichsbehälters (11) zu bringen.

12. Kondensator nach Anspruch 11, wobei die Verbindungsteile an die Seitenwand des Ausgleichsbehälters (11) angelötet sind.

## Revendications

1. Condenseur de véhicule comportant un accumulateur (10) et un collecteur de tête (11) auquel l'accumulateur (10) est raccordé en relation de parallélisme avec celui-ci, dans lequel ledit accumulateur comprend un contenant tubulaire (13 ; 113, 213 ; 313) ayant une paroi latérale (14 ; 114 ; 314) s'étendant le long d'un axe longitudinal (z) et ayant des extrémités opposées (15, 16), ledit contenant ayant en outre une entrée de fluide (17) et une sortie de fluide (18) disposées sur la paroi latérale (14 ; 114 ; 314) de celui-ci et raccordées à une section de condensation (SC) et une section de sous-refroidissement (SSR) du condenseur, respectivement,
dans lequel le condenseur, en utilisation, est disposé dans un arrangement horizontal dans lequel le contenant (13 ; 113, 213 ; 313) de l'accumulateur possède une partie inférieure et une partie supérieure par rapport à une direction transversale perpendiculaire à l'axe longitudinal (z) du contenant (13 ; 113, 213 ; 313), dans lequel l'entrée de fluide (17) comprend un orifice d'entrée (17b) formé au niveau de la paroi latérale (14 ; 114 ; 314) du contenant (13 ; 113, 213 ; 313), et la sortie de fluide (18) comprend un orifice de sortie (18a ; 18a') disposé au niveau ou près de la paroi latérale (14 ; 114 ; 314), au niveau de la partie inférieure du contenant (13 ; 113, 213 ; 313),
le condenseur étant **caractérisé en ce qu'**une ou plusieurs parties de raccordement (21, 22, 23 ; 21' ; 21", 22", 23" ; 121, 122, 123) sont disposées au niveau de la paroi latérale (14 ; 114 ; 314) du contenant (13 ; 113, 213 ; 313), lesdites parties de raccordement faisant latéralement saillie à partir de la paroi latérale, dans lequel lesdites parties de raccordement permettent de raccorder l'accumulateur (10) au collecteur de tête (11) du condenseur et de créer un espace d'air entre la paroi latérale (14 ; 114 ; 314) du contenant (13 ; 113, 213 ; 313) et le collecteur de tête (11), lesdites entrée de fluide et sortie de fluide étant formées à travers lesdites parties de raccordement.

2. Condenseur selon la revendication 1, dans lequel lesdites entrée de fluide et sortie de fluide possèdent une distance (d) l'une par rapport à l'autre, le long de l'axe longitudinal (z) du contenant (13 ; 113, 213 ; 313), égale ou supérieure à 15 mm.

3. Condenseur selon la revendication 1 ou 2, dans lequel l'orifice de sortie (18a') est formé sur la paroi latérale (14 ; 114 ; 314) du contenant (13 ; 113, 213 ; 313), au niveau de la partie inférieure du contenant (13 ; 113, 213 ; 313).

4. Condenseur selon la revendication 1 ou 2, dans lequel la sortie de fluide (18) comprend un tube (18b) attaché à la paroi latérale (14) du contenant (13), l'orifice de sortie (18a) étant disposé au niveau de l'extrémité inférieure du tube (18b), et étant disposé près de la paroi latérale (14) du contenant (13), au niveau de la partie inférieure du contenant (13).

5. Condenseur selon l'une quelconque des revendications précédentes, dans lequel ledit contenant possède un alésage interne de section transversale circulaire, dont le diamètre est compris entre 18 mm et 70 mm.

6. Condenseur selon l'une quelconque des revendications 1 à 4, dans lequel ledit contenant possède un alésage interne de section transversale non circulaire.

7. Condenseur selon l'une quelconque des revendications précédentes, dans lequel ledit contenant comprend une partie de contenant principale (113), l'entrée de fluide (17) et la sortie de fluide (18) étant disposées sur la paroi latérale (114) de celle-ci, et une partie de contenant d'extension (213) disposée alignée avec la partie de contenant principale (113) et attachée à une extrémité (15) de celle-ci.

8. Condenseur selon l'une quelconque des revendications précédentes, comprenant en outre un réservoir tubulaire auxiliaire (321) disposé parallèle au contenant (313) de l'accumulateur et raccordé à celui-ci à travers de la paroi latérale (314) du contenant (313), ladite paroi latérale ayant au moins une ouverture (323) qui place l'intérieur du contenant (313) de l'accumulateur en communication fluidique avec l'intérieur du réservoir auxiliaire (321).

9. Condenseur selon l'une quelconque des revendications précédentes, dans lequel ladite paroi latérale du contenant et lesdites parties de raccordement forment une pièce unique obtenue par extrusion et usinage.

10. Condenseur selon l'une quelconque des revendications précédentes, dans lequel lesdites parties de raccordement sont brasées sur la paroi latérale (14 ; 114 ; 314) du contenant (13 ; 113, 213 ; 313).

11. Condenseur selon l'une quelconque des revendications précédentes, dans lequel lesdites entrée de fluide et sortie de fluide permettent de placer l'intérieur du contenant (13 ; 113, 213 ; 313) de l'accumulateur en communication fluidique avec l'intérieur du collecteur de tête (11).

12. Condenseur selon la revendication 11, dans lequel lesdites parties de raccordement sont brasées sur la paroi latérale du collecteur de tête (11).
